# EUROPEAN PATENT SPECIFICATION

(11) **EP 3 691 327 B1**
(45) Date of publication and mention of the grant of the patent: **08.11.2023**
(21) Application number: 19155248.8
(22) Date of filing: 04.02.2019
(51) Int. Cl.: H04W 24/02, H04W 24/04, H04W 24/10, H04W 92/20, H04W 88/08

(54) **IMPROVING MANAGEMENT OF REMOTE INTERFERENCE IN WIRELESS COMMUNICATION NETWORKS**
VERBESSERUNG DER VERWALTUNG VON FERNSTÖRUNGEN IN DRAHTLOSKOMMUNIKATIONSNETZWERKEN
AMÉLIORATION DE LA GESTION D'INTERFÉRENCE À DISTANCE DANS DES RÉSEAUX DE COMMUNICATION SANS FIL

(43) Date of publication of application: 05.08.2020
(73) Proprietor: Nokia Technologies Oy, 02610 Espoo (FI)
(72) Inventor: UZEDA GARCIA, Luis Guilherme, 91300 Massy (FR); PONTECORVI, Matteo, 91120 Palaiseau (FR); MOUSSE ABINADER JUNIOR, Fuad, 91300 Massy (FR)
(74) Representative: Laine IP Oy

(56) References cited:
- ZTE: "Discussion on RIM mechanisms for improving network robustness", 3GPP DRAFT; R1-1812440 DISCUSSION ON RIM MECHANISMS FOR IMPROVING NETWORK ROBUSTNESS_FINAL, 3RD GENERATION PARTNERSHIP PROJECT (3GPP), MOBILE COMPETENCE CENTRE ; 650, ROUTE DES LUCIOLES ; F-06921 SOPH , vol. RAN WG1, no. Spokane, USA; 20181112 - 20181116 3 November 2018 (2018-11-03), XP051478640, Retrieved from the Internet: URL:http://www.3gpp.org/ftp/tsg%5Fran/WG1% 5FRL1/TSGR1%5F95/Docs/R1%2D1812440%2Ezip [retrieved on 2018-11-03]
- ZTE: "Consideration on mechanisms for improving network robustness", 3GPP DRAFT; R1-1810331 CONSIDERATION ON MECHANISMS FOR IMPROVING NETWORK ROBUSTNESS_FINAL, 3RD GENERATION PARTNERSHIP PROJECT (3GPP), MOBILE COMPETENCE CENTRE ; 650, ROUTE DES LUCIOLES ; F-06921 SOPHI , vol. RAN WG1, no. Chengdu, China; 20181008 - 20181012 29 September 2018 (2018-09-29), XP051517743, Retrieved from the Internet: URL:http://www.3gpp.org/ftp/tsg%5Fran/WG1% 5FRL1/TSGR1%5F94b/Docs/R1%2D1810331%2Ezip [retrieved on 2018-09-29]
- HUAWEI ET AL: "Discussion on OAM functions and RIM mechanisms", 3GPP DRAFT; R1-1900050, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Taipei; 20190121 - 20190125 12 January 2019 (2019-01-12), XP051575676, Retrieved from the Internet: URL:http://www.3gpp.org/ftp/tsg%5Fran/WG1% 5FRL1/TSGR1%5FAH/NR%5FAH%5F1901/Docs/R1%2D 1900050%2Ezip [retrieved on 2019-01-12]
- INTEL CORPORATION: "Mechanism on remote interference management", 3GPP DRAFT; R1-1812499, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 11 November 2018 (2018-11-11), XP051554443, Retrieved from the Internet: URL:http://www.3gpp.org/ftp/Meetings%5F3GP P%5FSYNC/RAN1/Docs/R1%2D1812499%2Ezip [retrieved on 2018-11-11]

## Description

### FIELD

Embodiments of the present invention relate in general to wireless communication networks and improving management of remote interference in such networks and, in particular, to a method, an apparatus and a computer program.

### BACKGROUND

In general, remote interference may appear under certain atmospheric conditions, wherein wireless nodes experience high Interference over Thermal, IoT. For example, tropospheric bending of radio waves may create an atmospheric duct, i.e., a waveguide. Atmospheric ducting may be an issue for various cellular networks, such as, in cellular networks operating according to Long Term Evolution, LTE, and/or 5G radio access technology. 5G radio access technology may also be referred to as New Radio, NR, access technology.

In case of cellular networks, downlink transmissions from base stations may create significant remote interference at distances that vastly exceed planned cell radius. As a result, the coverage and connection rate of cellular networks would be impacted. The problem is particularly relevant for synchronized Time Division Duplex, TDD, systems. There is therefore a need to provide improved solutions for managing remote interference to enable efficient operation of cellular networks. Similar improvements may also be useful in several other wireless communication networks as well, such as, for example, in Wireless Local Area Networks, WLANs.

ZTE: "Discussion on RIM mechanisms for improving network robustness", 3GPP DRAFT; R1-1812440; vol. RAN WG1, Spokane, USA; 2018-11-03; discusses about several RIM frameworks and provides views on each RIM framework.

ZTE: "Consideration on mechanisms for improving network robustness", 3GPP DRAFT; R1-1810331; vol. RAN WG1, Chengdu, China; 2018-09-29; also discusses about several RIM frameworks and provides views on each RIM framework.

HUAWEI ET AL: "Discussion on OAM functions and RIM mechanisms", 3GPP DRAFT; R1-1900050; vol. RAN WG1, no. Taipei; 2019-01-12; discusses about OAM functions for supporting RIM operation and provides a couple of OAM functions that are beneficial for RIM operation. Also, views on whether RIM-RS carries further information are given.

### SUMMARY OF THE INVENTION

According to some aspects, there is provided the subject-matter of the independent claims. Some embodiments are defined in the dependent claims.

The invention is set out in the appended set of claims.

### BRIEF DESCRIPTION OF THE DRAWINGS

FIGURE 1 illustrates an exemplary network scenario in accordance with at least some embodiments of the present invention;
FIGURE 2 illustrates an interference scenario in accordance with at least some embodiments of the present invention;
FIGURE 3 illustrates a deployment scenario in accordance with at least some embodiments of the present invention;
FIGURE 4 illustrates an example apparatus capable of supporting at least some embodiments of the present invention;
FIGURE 5 illustrates an exemplary, general concept in accordance with at least some embodiments;
FIGURE 6 illustrates an exemplary scenario comprising a distributed ledger;
FIGURE 7 illustrates a high-level process in accordance with at least some embodiments;
FIGURE 8 illustrates a process related to gathering of physical RF attributes in accordance with at least some embodiments;
FIGURE 9 illustrates a process related to gathering of logical attributes in accordance with at least some embodiments;
FIGURE 10 illustrates a process associated with an output of an classifier in accordance with at least some embodiments;
FIGURE 11 illustrates an exemplary concept related to classification in accordance with at least some embodiments;
FIGURE 12 illustrates a carrier-centric blockchain approach in accordance with at least some embodiments;
FIGURE 13 illustrates an external blockchain approach in accordance with at least some embodiments;
FIGURE 14 illustrates a scenario comprising multiple aggressor and victim cells in accordance with at least some embodiments;
FIGURE 15 illustrates a flow graph of a method in accordance with at least some embodiments of the present invention.

### EMBODIMENTS

Operation of wireless communication networks may be improved by the procedures described herein. More specifically, operation of wireless communication networks may be improved by enabling efficient management of remote interference. A network node may obtain an indication associated with remote interference and gather physical Radio Frequency, RF, attributes and logical attributes associated with the indication. Based on the gathered physical RF and logical attributes associated with the indication, the network node may determine a profile and perform an action based on the determined profile. For example, if the indication is determined as valid, the network node may perform remote interference management. However, the network node may discard the indication if it determines that the indication can be ignored. On the other hand, if the indication is determined as malicious, the network node may warn other network nodes about the situation.

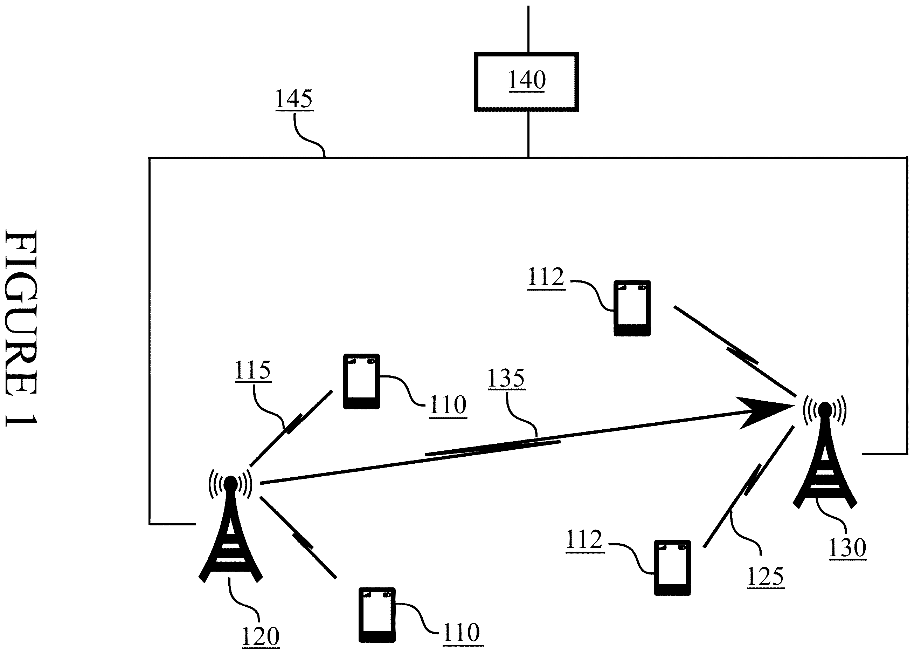

FIGURE 1 illustrates an exemplary network scenario in accordance with at least some embodiments. According to the example scenario of FIGURE 1, there may be a wireless communication network comprising User Equipments, UEs, 110 and 112, first Base Station, BS, 120, second BS 130 and core network element 140. UEs 110 may be connected to BS 120 via air interface 115 while UEs 120 may be connected to BS 130 via air interface 125.

UEs 110 and 112 may comprise, for example, a smartphone, a cellular phone, a Machine-to-Machine, M2M, node, Machine-Type Communications node, MTC, an Internet of Things node, a car telemetry unit, a laptop computer, a tablet computer or, indeed, another kind of suitable wireless terminal or mobile station in general. In the example system of FIGURE 1, UEs 110 may communicate wirelessly with a cell of BS 120 via air interface 115. Air interface 115 between UEs 110 and BS 120 may be configured in accordance with a first Radio Access Technology, RAT, which UEs 110 and BS 120 are configured to support. Similarly, UEs 112 may communicate wirelessly with a cell of BS 130 via air interface 125. Air interface between UEs 112 and BS 130 may be configured in accordance with a second Radio Access Technology, RAT, which UEs 112 and BS 130 are configured to support. The first RAT and the second RAT may, or may not, be the same. In some embodiments, the first RAT and the second RAT may be operating on the same frequency, or on frequencies that are close to each other, so that BS 120 may cause interference towards BS 130. Typically, the first and the second RATs are the same but embodiments of the present invention may also be applied if the first and the second RATs would be different.

Examples of cellular RATs include Long Term Evolution, LTE, New Radio, NR, which may also be known as fifth generation, 5G, radio access technology and MulteFire. On the other hand, examples of non-cellular RATs include Wireless Local Area Network, WLAN, and Worldwide Interoperability for Microwave Access, WiMAX. For example, in the context of LTE, BSs may be referred to as eNB while in the context of NR, BSs may be referred to as gNB. In some exemplary embodiments, NR and LTE NBs using the same numerology, such as 15KHz, would have the same frame timing.

Also, for example in the context of WLAN, BSs may be referred to as access points. In general, BSs may be referred to as wireless network nodes. UEs may be similarly referred to as wireless terminals or mobile stations in general. In any case, embodiments are not restricted to any particular wireless technology. Instead, embodiments may be exploited in any system which uses wireless transmissions.

BSs 120 and 130 may be connected, directly or via at least one intermediate node, with core network 140 via interface 145. Core network 140 may be, in turn, coupled via an interface with another network (not shown in FIGURE 1), via which connectivity to further networks may be obtained, for example via a worldwide interconnection network. In some embodiments an inter-base station interface between BSs 120 and 130 may be absent. For example, BSs 120 and 130, or cells of BSs 120 and 130, may belong to different carriers in some remote interference scenarios and be very far from each other. BSs 120 and 130 may be connected, directly or via at least one intermediate node, with core network 140 or with another core network.

In some embodiments of the present invention, transmissions of BS 120 may cause interference towards BS 130. Thus, BS 120 may be referred to as an aggressor, and a cell of BS 120 may be referred to as an aggressor cell, while BS 130 may be a victim, and a cell of BS 130 may be referred to as a victim cell. Interference caused by BS 130, or a cell of BS 130, may be referred to as remote interference. For instance, in some remote interference scenarios there may be no consistent line-of-sight or non-line-of-sight channel between BSs 120 and 130 due to geographic separation, i.e., the channel between BSs 120 and 130 may arise spontaneously due to anomalous tropospheric propagation. In some embodiments, an aggressor cell may not be synonymous to an attacker, because remote interference may not be necessarily generated maliciously. A victim cell may be understood as a cell receiving remote interference, e.g., Interference over Thermal, IoT, above a threshold, and an aggressor cell may be understood as a cell causing said remote interference received by the victim cell to be above the threshold.

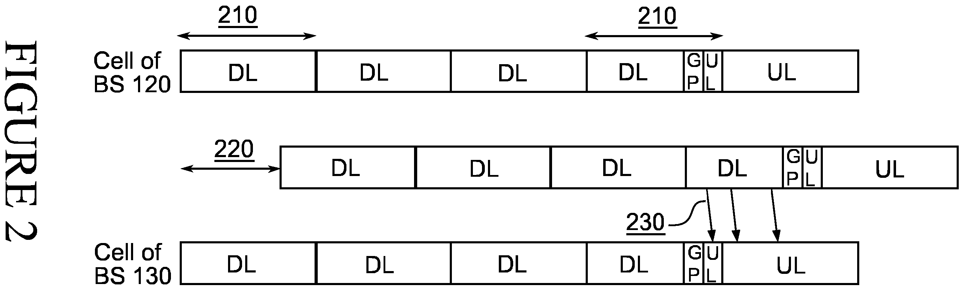

FIGURE 2 illustrates an interference scenario in accordance with at least some embodiments of the present invention. The interference scenario represents a problem associated with remote interference using a NR system as an example. In FIGURE 2, remote interference from a cell of BS 120, i.e., an aggressor cell, is shown for a case, wherein Subcarrier Spacing, SCS, is 30 kHz and slot length 210 is 0.5 ms. Thus, FIGURE 2 illustrates one segment of length of 2.5 ms, i.e., comprising five slots 210. The segment may be repeated within a radio frame of 10 ms.

The interference scenario of FIGURE 2 comprises Downlink, DL, transmissions, Guard Periods, GP and Uplink, UL, transmissions. As shown in FIGURE 2, quite a few UL Orthogonal Frequency Division Multiplexing, OFDM, symbols after a GP associated with UL transmissions in a cell of BS 130, i.e., a victim cell may be interfered depending on propagation delay 220. For example, DL transmissions 230 of a cell of BS 120 may interfere with UL transmission in the cell of BS 130. Said interference may impact reception of several UL channels, such as Physical Uplink Control Channel, PUCCH, Physical Uplink Shared Channel, PUSCH and Primary Random Access Channel, PRACH, causing issues in random access, UL coverage and throughput, and even in DL throughput due to a possible deterioration of reception of Uplink Control Channel, UCI.

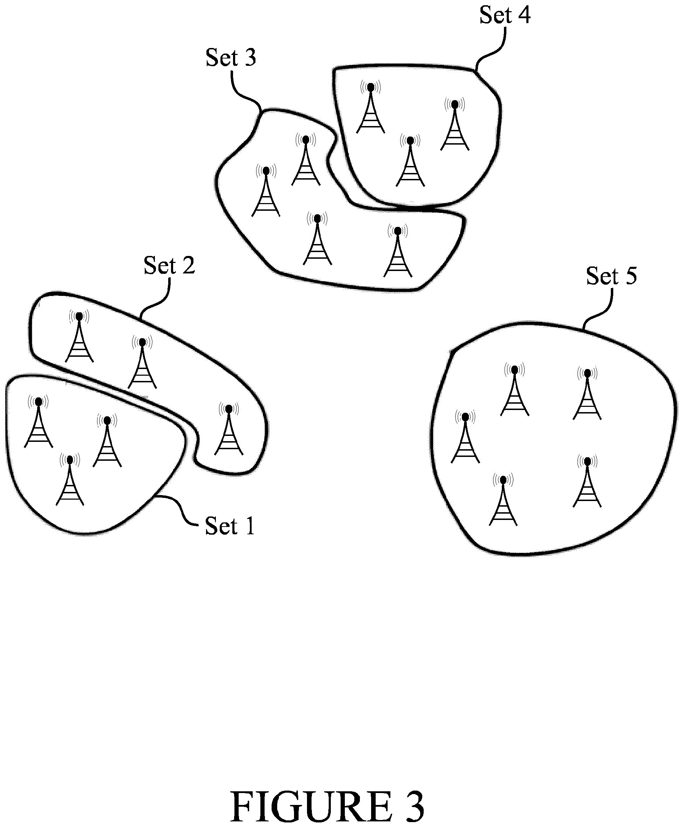

FIGURE 3 illustrates a deployment scenario in accordance with at least some embodiments of the present invention. More specifically, FIGURE 3 demonstrates remote areas, i.e., sets of BSs. Each set of BSs may be seen as a local group and remote interference may be defined as interference between sets of BSs. It may be noted that if an atmospheric interference phenomenon, i.e., remote interference occurs, BSs in one area may often affect BSs in many other areas. The BSs within one area may have similar atmospheric interference characteristics. In some embodiments, an operator may assign a group Identity, ID, or a set ID, to one or more BSs that are frequently interfered by, or interfere with, a certain BSs. For example, the operator may assign the BSs to one group, i.e., a set, based on historical data or geographical location. In some embodiments of the present invention, BSs may be assigned to groups, or sets, to avoid signalling storms. That is to say, BSs may be assigned to groups, or sets, to reduce the signalling load because the interference experienced by all the BSs within one group, or one set, is similar and hence it may be sufficient to indicate the interference situation of the group, or the set, with one indication.

Embodiments of the present invention may be applied for various signalling frameworks, such as signalling frameworks presented in a 3GPP document R1-1809943, Agreements on NR Remote Interference Management, RIM, frameworks, for 3GPP TSG RAN WG1 Meeting #94, Gothenburg, Sweden, August 20th - 24th, 2018. In R1-1809943, so-called Framework 1 is an over-the-air, OTA, solution, while Frameworks 2.1 and 2.2 rely on backhaul signalling. All frameworks may entail standardization efforts on the air interface and the last two also require specification of the backhaul signalling.

In all three frameworks 1, 2.1 and 2.2 of R1-1809943, remote interference may occur and be detected. Consequently, a victim BS, such as BS 130, may transmit Remote Interference Management - Reference Symbols, RIM-RSs, to inform the aggressor side. RIM-RSs may be transmitted over air interface and comprise a rather limited number of bits over a wireless channel. The wireless channel may be unreliable due to anomalous propagation. Therefore, this type of signalling is prone to unintentional misjudgements, i.e., random errors as well as intentional attacks, for example by rogue BSs.

Complicating matters further, the trust model may not be traditional, e.g., a between a subscriber and an operator, and the small number of available information bits may hinder strong encryption-based authentication mechanisms. Upon detection of RIM-RS the aggressor, such as BS 120, may trigger unnecessary signalling over air interface or backhaul link, which may lead to an unjustified waste of radio resources. The issue may be severe for example in Framework 1 of R1-1809943, which relies entirely on signalling over air interface. Frameworks 2.1 and 2.2 may be more secure because they rely on backhaul signalling, however they do not solve the issue completely, since coordinated man-in-the-middle-attacks are a possibility.

Therefore, there is a need to provide a solution for handling the (semi) blind trust issue associated with transmission of RIM-RSs. Moreover, remote interference may also affect areas served by different operators. In case of such inter-operator scenarios a common Operation, Administration and Management, OAM, entity may not be available, which would lead to lack of auditing mechanisms. RIM actions may also resource allocation restrictions and hence it may be desirable to keep track of the mitigation actions to support and validate legal collaboration agreements, i.e. contracts. Embodiments of the present invention therefore provide improvements related to handling of remote interference in general, thereby enabling efficient and secure operation of wireless communication networks in the presence of remote interference, even for inter-operator scenarios.

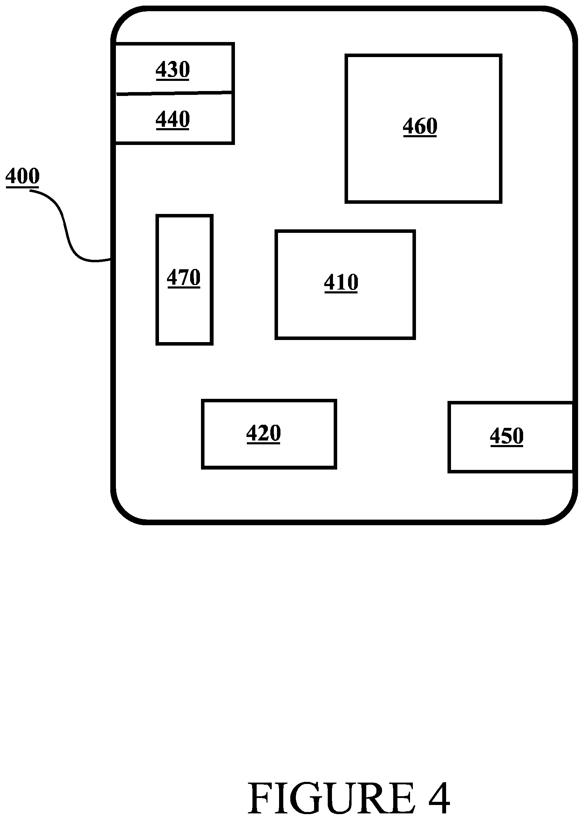

FIGURE 4 illustrates an example apparatus capable of supporting at least some embodiments of the present invention. Illustrated is device 400, which may comprise, for example, BS 120 of FIGURE 1, or a control device controlling BS 120. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. A processing core may comprise, for example, a Cortex-A8 processing core manufactured by ARM Holdings or a Steamroller processing core produced by Advanced Micro Devices Corporation. Processor 410 may comprise at least one Qualcomm Snapdragon and/or Intel Atom processor. Processor 410 may comprise at least one application-specific integrated circuit, ASIC. Processor 410 may comprise at least one field-programmable gate array, FPGA. Processor 410 may be means for performing method steps in device 400. Processor 410 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 400 may comprise memory 420. Memory 420 may comprise random-access memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular or non-cellular standard. Transmitter 430 may comprise more than one transmitter. Receiver 440 may comprise more than one receiver. Transmitter 430 and/or receiver 440 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 400 may comprise a near-field communication, NFC, transceiver 450. NFC transceiver 450 may support at least one NFC technology, such as NFC, Bluetooth, Wibree or similar technologies.

Device 400 may comprise user interface, UI, 460. UI 460 may comprise at least one of a display, a keyboard, a touchscreen, a vibrator arranged to signal to a user by causing device 400 to vibrate, a speaker and a microphone. A user may be able to operate device 400 via UI 460, for example to accept incoming telephone calls, to originate telephone calls or video calls, to browse the Internet, to manage digital files stored in memory 420 or on a cloud accessible via transmitter 430 and receiver 440, or via NFC transceiver 450, and/or to play games.

Device 400 may comprise or be arranged to accept a user identity module 470. User identity module 470 may comprise, for example, a subscriber identity module, SIM, card installable in device 400. A user identity module 470 may comprise information identifying a subscription of a user of device 400. A user identity module 470 may comprise cryptographic information usable to verify the identity of a user of device 400 and/or to facilitate encryption of communicated information and billing of the user of device 400 for communication effected via device 400.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. For example, where device 400 comprises a smartphone, it may comprise at least one digital camera. Some devices 400 may comprise a back-facing camera and a front-facing camera, wherein the back-facing camera may be intended for digital photography and the front-facing camera for video telephony. Device 400 may comprise a fingerprint sensor arranged to authenticate, at least in part, a user of device 400. In some embodiments, device 400 lacks at least one device described above. For example, some devices 400 may lack a NFC transceiver 450 and/or user identity module 470.

Processor 410, memory 420, transmitter 430, receiver 440, NFC transceiver 450, UI 460 and/or user identity module 470 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the embodiment various ways of interconnecting at least two of the aforementioned devices may be selected without departing from the scope of the present invention.

In general, security is known to be a negative goal and hence a hard concept to guarantee. As a result, a series of steps offering extra layers of protection should be used to enable security. Embodiments of the present invention provide at least one step for enabling security. In some embodiments, a data-based classification framework and associated signalling support is provided. A single attribute may be forged, but some embodiments provide enhanced security by exploiting multiple attributed, thereby making it much more complex to forge an authenticity of a series of physical Radio Frequency, RF, and logical attributes gathered locally, for example at a set level with the aid of neighbouring cells and possibly even UEs. In some embodiments, decisions may be collaborative and hence not limited to information collected by a single node.

Moreover, some embodiments of the present invention allow for distributed learning and inter-operator auditing mechanisms. Embodiments of the present invention do not dictate or alter mitigation of remote interference from a Radio Resource Management, RRM, perspective. Instead, at least some embodiments focus on initiation and termination steps.

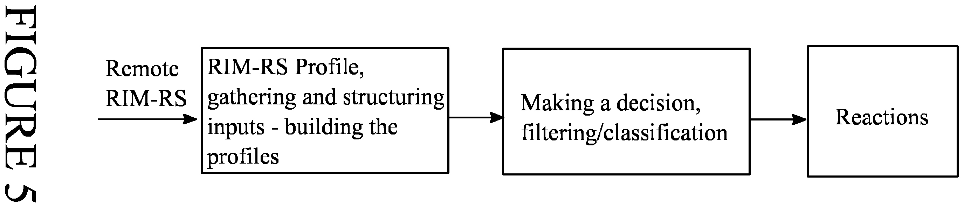

FIGURE 5 illustrates an exemplary, general concept in accordance with at least some embodiments. Tasks illustrated in FIGURE 5 may be performed by multiple apparatuses of FIGURE 4. For instance, one apparatus per BS. However, in some embodiments, there may be one apparatus of FIGURE 4 per single cluster/group, e.g., in case of a central/distributed unit NR deployment.

In some embodiments, aggregation of physical RF and logical attributes of indications associated with remote interference, such as RIM-RSs, may be performed as first step to create indexed and structured profiles of known IDs of BSs and/or IDs of sets of BSs. For example, the aggregation may be performed via message exchanges within a set. That is to say, a first network node, such as BS 130, may belong to a set of network nodes and gather physical Radio Frequency, RF, attributes and logical attributes associated with the indication from other nodes in the set.

The number of attributes and their nature (ranges, statistical distribution, Boolean, etc) making up such profiles may be manually configured by an operator, learned via sensing or a combination of both approaches. Manual configuration may be seen as a semi-static approach while learning typically leads to a more dynamic adaptation.

After the aggregation step, a classification procedure may be performed as the next step. In general, the objective of the classification procedure is to endow BSs, or a functionally equivalent entity such as a Central Unit, CU, with the capability to distinguish valid indications associated with remote interference from indications that should not trigger any interference mitigation actions. Some embodiments of the present invention thus address the blind trust issue by carrying out the classification procedure. In general, the classification procedure may be performed by a classifier and the classifier may operate based on simple deterministic rules, statistical analysis and/or advanced machine learning techniques. The classifier as well as the rules may also evolve over time through manual or autonomous configuration. However, according to some embodiments the classifier and the rules may still rely on standardized data structures used to persist semantics of learned attributes in a remote interference profile as well as inference rules for detecting said attributes. In some embodiments, one classifier, e.g., an apparatus of FIGURE 4 may be required per BS or cell for a fully distributed operation.

In some embodiments, a first network node, such BS 120 or a functionally equivalent entity, e.g., a CU, may be able to distinguish valid indications associated with remote interference, e.g., RIM-RS, from the ones that should not trigger any interference mitigation actions. That is to say, the first network node may determine, based on a profile, whether an indication associated with remote interference is valid.

Various attributes may be used to determine whether an indication associated with remote interference is valid. For example, said attributes may comprise physical RF attributes, such as an estimated Time of Flight, ToF, logical attributes such as a logical bitmap describing which neighbours within the same set detected the same indications associated with remote interference and/or time of the day, etc. In general, physical RF attributes may comprise measurements results related to a signal carrying the indication associated with the indication and logical attributes may comprise characteristics related to a timing of reception of the indication, for example.

In some embodiments, the classification procedure, i.e., an output of the classifier, may lead to three different actions. If the indication associated with remote interference is determined as valid, the first network node may perform with RIM actions. For example, said RIM actions may comprise RIM actions according to frameworks 1, 2.1. or 2.2 in R1-1809943. On the other hand, if it is determined that the indication associated with remote interference may be ignored, no RIM actions are required and the indication may be discarded. Moreover, if the indication associated with remote interference is determined as malicious, the first network node may disseminate information regarding potential attack.

In some embodiments, classification algorithms may be an implementation issue, i.e. a black-box. Hence, an output of the classification procedure and an associated response may be automatically communicated and stored in a structured and standardisable manner. The structured and standardised manner of the output of the classification procedure enables supervised learning algorithms and auditing of transactions. For example, for auditing of transitions a local data historian, also known as an operational historian, may be included.

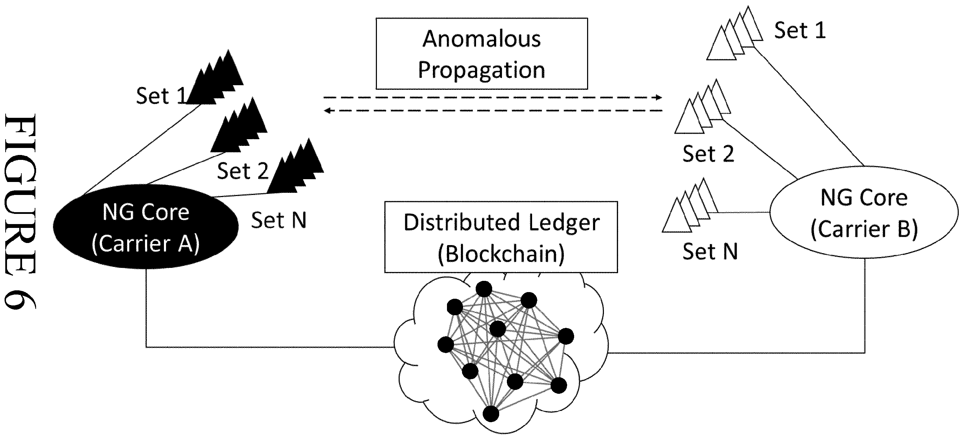

FIGURE 6 illustrates an exemplary scenario comprising a distributed ledger. In some embodiments, the distributed ledger may be associated with a blockchain and the blockchain may be used to enable creation and preservation of trustworthy RIM digital records. That is to say, according to some embodiments of the present invention, the traditional historian may be replaced by a fully distributed and independent mechanism based on the blockchain concept. The blockchain may be used to achieve transparency, immutability, security, auditability and high cost-efficiency while being available all the time. The use of the blockchain may be particularly advantageous in scenarios, wherein remote interference affects areas served by different operators, i.e., inter-operator RIM scenario, wherein operators may even be in different countries. Moreover, in some embodiments blockchains may run on a Consensus Protocol which could be standardized. That is to say, a blockchain protocol may be standardized in case of some applications.

As shown in the exemplary scenario of FIGURE 6, there may be anomalous propagation, i.e., anomalous remote interference, between sets of BSs of different carriers, such as Carrier A and Carrier B. For example, in the context of 5G, Carrier A may have its own NG Core while Carrier B may have its own NG Core as well. Sets of BSs of Carrier A may be connected to the blockchain via NG Core of Carrier A. Similarly, sets of BSs of Carrier B may be connected to the blockchain via NG Core of Carrier B. Thus, information may be transmitted from sets of BSs to the blockchain for enabling creation and preservation of trustworthy RIM digital records.

The blockchain may be applied for recording transactions, such as profiles and/or actions related remote interference management, without relying to a centralized entity. Changes in resource ownership in the blockchain network take the form of blockchain transactions secured by strong cryptography. Information provided in a blockchain transaction may be stored as a new block in the blockchain in response to validation of the respective blockchain transaction. Blockchain state information shared by the nodes may store all transactions and history carried out in the blockchain network. Application of blockchain technology and a ledger may enable a way to track the unique history of transactions by the individual nodes in the network.

In some embodiments of the present invention, the blockchain may be used to provide a completely auditable log that includes every single transaction ever done in a blockchain network, which may be very useful in a number of use cases.

In some embodiments of the present invention, the first network node may combine physical RF and logical attributes into a profiles. The physical RF and logical attributes may be associated with an indication obtained by the first network node, the indication indicating remote interference. The physical physical RF attributes may be gathered by the first network node by measuring physical RF attributes of the received indication, i.e., by measuring a signal carrying the indication. Alternatively, or in addition, gathering physical RF attributes may comprise gathering physical RF attributes associated with the indication from the set of network nodes, e.g., by transmitting, to the set of network nodes, a request for reporting at least one physical RF attribute and receiving the at least one physical RF attribute in response to the request. The logical attributes, such as time of day, may be gathered by estimating logical attributes associated with the received indication. Alternatively, or in addition, gathering logical attributes may comprise gathering the logical attributes from an external source, e.g. from the Internet, by transmitting a request to the external source for at least one logical attribute associated with the indication and receiving the at least one logical attribute in response to the request.

In some embodiments, the first network node may transmit an explicit command requesting wireless terminal to indicate whether the indication associated with remote interference has been detected. Also, information related to the indication, such as a profile or some attributes, may be exchange with a set of network nodes, possibly via a backhaul link such as an Xn interface, to augment and/or to validate the profiles.

In some embodiments, the first network node may query for information about the profiles, e.g., by querying of tropospheric ducting forecast services, typically over an TCP/IP connection, to augment profiles.

In some embodiments, the first network node may perform classification of received indications based on the gathered profiles. That is to say, the first network node may classify the indication as valid, malicious or safe-to-ignore, and perform an action based on the classification. Depending on the outcome of the process, the first network node may perform exchange of further information. Moreover, the output of the classifier may be structured to enable feedback, learning and auditing mechanisms.

In some embodiments, a digital record of performed actions related to remote interference management and/or profiles associated with indication are created and maintained, e.g., the first network node transmits information about the profile and/or the action to a blockchain. For example, the digital record may be created and maintained using a distributed ledger, e.g. blockchains, possibly by exploiting a defined consensus protocol

As discussed, transmissions over air interface are more vulnerable to malicious attacks and non-intentional errors compared to transmissions over wired links. Security may be enhanced by using authentication schemes. For example, key-based mutual authentication of IDs of BSs, or IDs of sets of BS, and possibly message authentication may be a straightforward solution, however, its effectiveness is hindered by the limited number of bits carried by indications associated with remote interference, e.g., RIM-RS, the nature of long-distance tropospheric channels and multiple use cases. Some embodiments of the present invention therefore provide a holistic approach, based on profiles. Said profiles may combine logical and physical RF attributes, i.e., features.

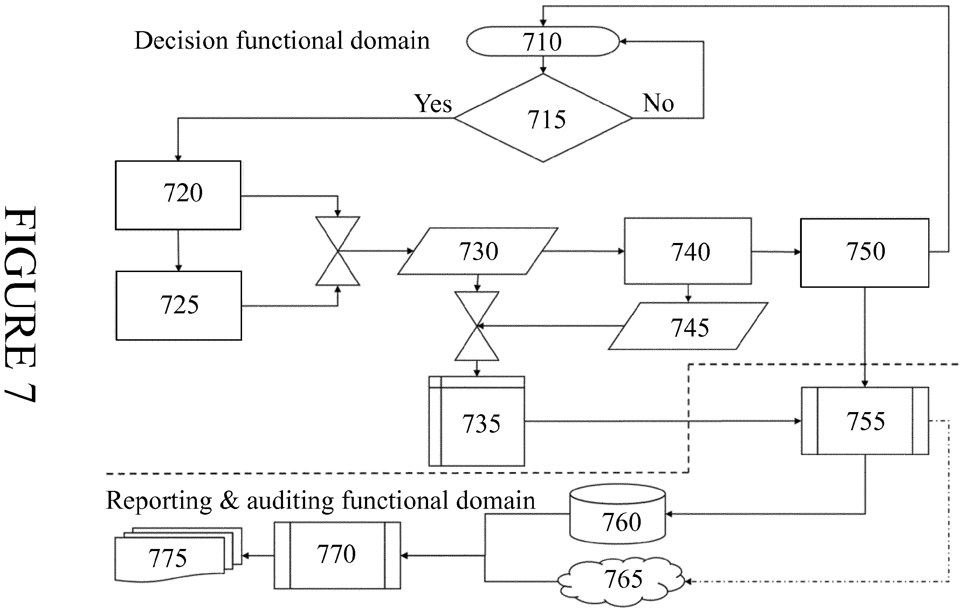

FIGURE 7 illustrates a high-level process in accordance with at least some embodiments. At least some steps, such as steps 710 - 755, of the he high-level process of FIGURE 7 may performed by a first network node, e.g., BS 120 or functionally equivalent entity such as a CU. The process may comprise, at step 710, monitoring for an indication associated with remote interference. The indication associated with remote interference may be a RIM-RS, for example. At step 715, the process may comprise determining whether the indication associated with remote interference was received. If not, the process may move back to step 710.

However, if the indication associated with remote interference was received, the process may proceed to step 720, wherein the first network node may gather RF attributes related to the received indication associated with remote interference. At step 725, the first network node may gather logical attributes related to the received indication associated with remote interference. Moreover, at step 730, the first network node may create, or generate, a profile based on the RF and logical attributes. The profile may be indexed to generate a profile associated with an index. The profile may be indexed according to an ID of a set, wherein a second network node, such as BS 130, that transmitted the indication belongs to the set. Alternatively, or in addition, the profile may be indexed according to an ID of the second network node. In some embodiments, the RF and logical attributed may be used for indexing as well.

At step 735, the profile may be stored by the first network node along with the gathered attributes. Furthermore, the first network node may, at step 740, classify the profile and then, at step 745, category data may be generated based on the classification. The category data may be stored together with the profile. Upon classifying the profile, the first network node may, at step 750, trigger adequate RIM actions, such as performing remote interference management, discarding the indication or transmitting a warning. In general, performing remote interference management may comprise reducing transmission or directing transmissions away from the victim, such as BS 130.

After the first network node has triggered, and possibly performed, said adequate RIM actions, said actions may be processed and logged at step 755, to generate processed and logged data. The processing and logging at step 755 may also comprise processing and logging the stored profiles and outcomes together with the RIM actions. The processed and logged data may be transmitted to a historian at step 760 and to a blockchain at step 765. Moreover, at step 770, information may be fetched from the historian and the blockchain to generate reports. Finally, at step 775, the reports may be utilized, e.g., by other network nodes by fetching information about stored profiles and actions associated with indication from the blockchain.

In general, the profile associated with the indications may comprise physical RF attributes, such as a received signal strength (statistical distribution), time of flight (statistical distribution), angle of arrival (statistical distribution) or Doppler shifts (statistical distribution). Alternatively, or in addition, the profile associated with the indications may comprise logical attributes, such as date and time, likelihood and intensity of Tropospheric Ducting, encryption keys, etc. The attributes may be detected by wireless terminals or by other network nodes belonging to a same set as the first network node.

Use of the physical RF attributes, such as received signal strength or time of flight, for profiling brings several advantages, because such an approach does not require any additional signalling overhead over air interface. In addition, at least some physical RF attributes are expected to have matching signatures that can be analysed by well-known statistical signal processing algorithms or more advance machine learning techniques. For example, due to the distance, the time of flight may be expected to be much larger for remote victims, the angle of arrival of the signals will be typically tilted towards the sky, limited Doppler shifts for static BSs, UEs below an antenna of a BS will most likely not be able to pick up these reference signals, while other BS in the same are likely to capture them as well. Moreover, some of the logical attributes can also be obtained easily, for example, tropospheric ducting is more prone to occur during specific seasons and daytimes than others. For example, there may be Internet sites that provide forecasts for several regions of the planet indicating the, type, likelihood and intensity of anomalous propagation.

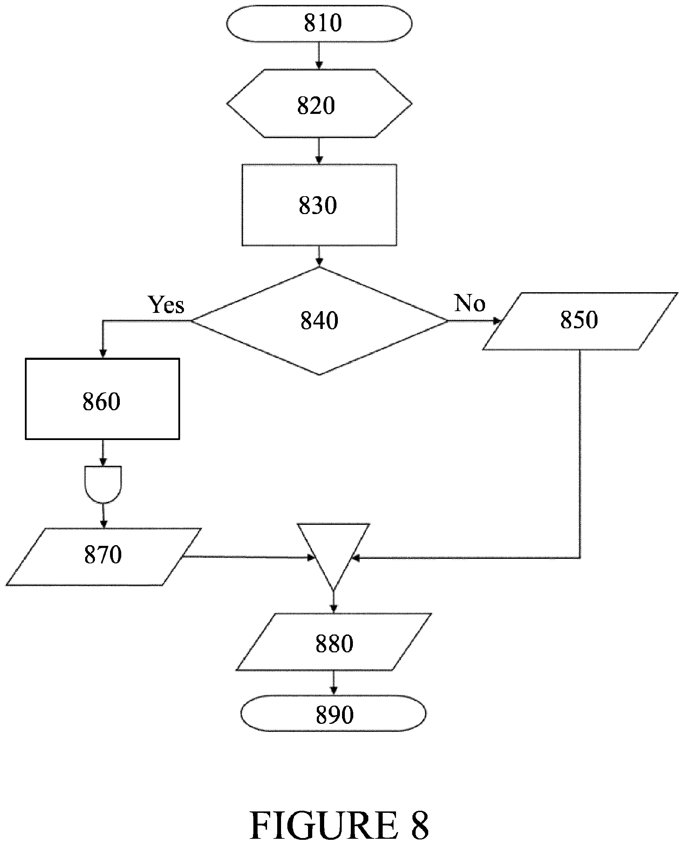

Some examples of processes that entail non-OTA, possibly intra-set signalling, to create/augment/validate and use the profiles are presented in FIGUREs 8, 9 and 10.

FIGURE 8 illustrates a process related to gathering of physical RF attributes in accordance with at least some embodiments. The process may be performed by a first network node, e.g., BS 120 or functionally equivalent entity such as a CU.

The process of FIGURE 8 may start at step 810. At step 820, the first network node may gather physical RF attributes. Moreover, at step 830 the first network node may estimate local physical RF attributes. At step 840, the first network node may decide whether to request complementary data from other network nodes, such as BSs. If the first network decides not to request complementary data from other network nodes, the process may proceed to step 850, wherein the first network node may use only the local physical RF attributes, i.e., the physical RF attributes gathered by the first network node.

However, if the first network decides to request complementary data from other network nodes, the process may proceed to step 860, wherein the first network node may trigger information exchange within a set of network nodes that it belongs to. That is to say, a request-response intra-set signalling may be triggered at step 860. In some embodiments, received physical RF attributes, such as a received signal strength of a RIM-RS sent by a nearby victim BS, or a set of victim BSs, may be expected to be much higher than that of a remote victim, or a set of victim BSs. Similarly, very strong RIM-RS coming from downward-tilted angles of incidence may indicate a rogue BS in the vicinity.

However, data from neighbouring network nodes, such as BSs, CUs or Distributed Units, DUs, may corroborate or dismiss that hypothesis. In this respect, the first network node would, at step 860, send/receive information to/from other network nodes, belonging to the same set as the first network node, regarding one or multiple attributes to build a more detailed profile. This message exchange may preferably be performed over a wired and trusted medium, e.g. an Xn interface. In some embodiments, the request message may comprise information expressing which attributes, i.e., Information Elements, IEs, are needed. Then, the response message may contain structured data related to the request. Alternatively, in some embodiments information may be exchanged using the same request/report message structure with a network node that acts as a proxy for the set of network nodes that the first network node belongs to, thereby centralizing the information at a level of the set.

Upon performing said information exchange, i.e., the request-response intra-set signalling at step 860, the first network node may gather, at step 870, additional physical RF attributes from other network nodes within the set of network nodes that it belongs to.

After both steps, 850 and 860, the process may proceed to step 880, wherein the physical RF attributes may be compiled. The compiled physical RF attributes may be used for profiling. Finally, the process may end at step 890.

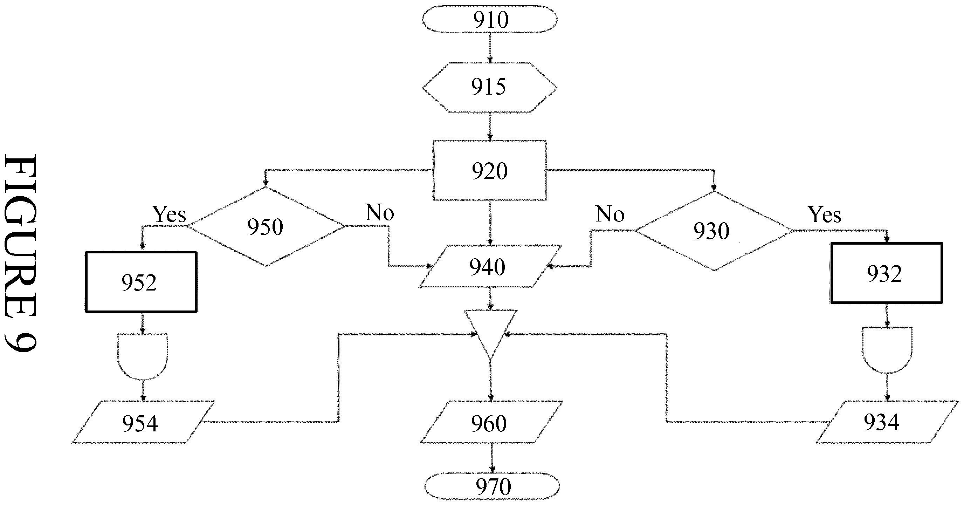

FIGURE 9 illustrates a process related to gathering of logical attributes in accordance with at least some embodiments. The process may be performed by a first network node, e.g., BS 120 or functionally equivalent entity such as a CU. The process of FIGURE 9 comprises querying other network nodes within the same set that the first network node belongs to and possibly external sources of information on the Internet to gather further logical evidence to feed the decision process. A similar request-response procedure may take place locally over the backhaul link as in the process of FIGURE 8. Alternatively, or in addition, the process of FIGURE 9 may comprise querying wireless terminals.

The process of FIGURE 9 may start at step 910. At step 915, the first network node may gather logical attributes. Moreover, at step 920 the first network node may estimate said logical attributes.

In some embodiments, the process may proceed to step 930 after step 920. At step 930, the first network node may decide whether to request complementary data from wireless terminals, such as UEs. If the first network decides not to request complementary data from wireless, the process may proceed to step 940, wherein the first network node may use only the local logical attributes, i.e., the logical attributes gathered by the first network node, for profiling.

However, if the first network decides to request complementary data from wireless terminals, the process may proceed to step 932, wherein the first network node may query UEs. That is to say, at step 932 the first network node may transmit a command to at least one wireless terminal for requesting the at least one wireless terminal to report whether an indication associated with remote interference, such as RIM-RS, has been detected. The command may comprise exact location(s) in a time-frequency grid for performing measurements in search of a specific indication, e.g., RIM-RS. For example, BS 120 may transmit the command to Idle- or Inactive-mode UEs to request collaboration. For instance, if RIM-RS design is based on Code Division Multiplexing, CDM, the wireless terminals would also receive the pertinent code information. In response, wireless terminals would reply with a binary indicator. The role of UE collaboration is particularly relevant for the identification of a rogue BS, akin to International mobile subscriber identity, IMSI-catchers. Therefore, BS 120 may receive, in response to the command, from the at least one wireless terminal a binary indicator indicating whether an indication associated with remote interference has been received by the at least one wireless terminal.

At step 934, the first network node may gather logical attributes from the at least one wireless terminal. In some embodiments, the optional logical attributes from the at least one wireless terminal may act as additional evidence, i.e., meta-data, which may become a part of a profile and used by a classifier.

In some embodiments, the process of FIGURE 9 may proceed to step 950 after step 920. At step 950, the first network node may decide whether to query external sources. If the first network decides not to query external sources, the process may proceed to step 940, wherein the first network node may use only the local physical RF attributes.

However, if the first network decides to query external sources for complementary data, the process may proceed to step 952, wherein the first network node may query external sources. That is to say, at step 952 the first network node may transmit a request to an external source, e.g., in the Internet, to get further logical evidence/attributes to be used for profiling. At step 954, the first network node may gather logical attributes from the external source, i.e., the first network node may receive at least one logical attribute in response to the request.

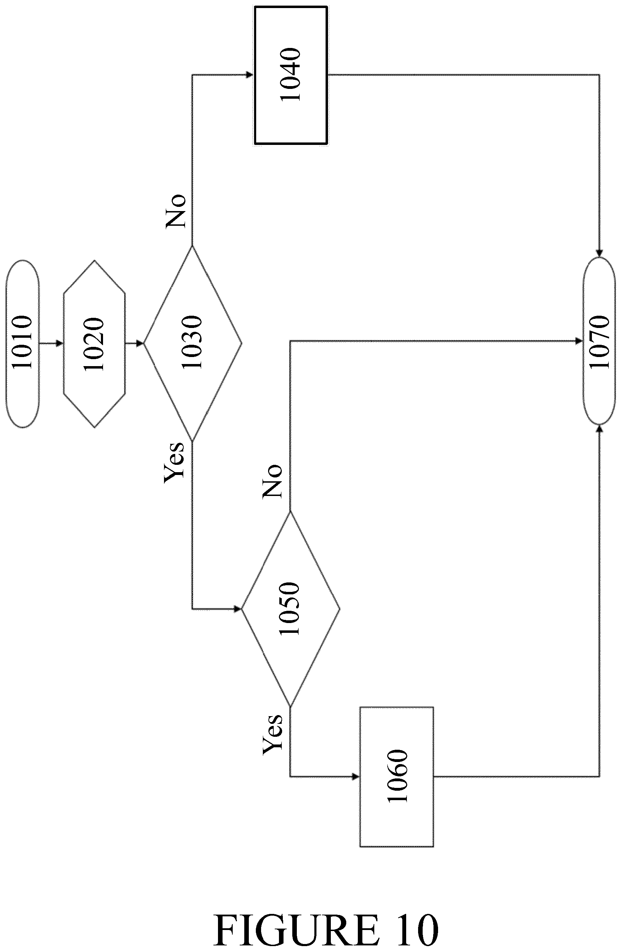

FIGURE 10 illustrates a process associated with an output of an classifier in accordance with at least some embodiments. That is to say, FIGURE 10 demonstrates a sequence of actions triggered once a decision has been made by the classifier, i.e., a workflow associated with the output of the classifier. With reference to FIGURE 7, the classifier may perform the classification step 740 and the first network node may comprise the classifier. The process of FIGURE 10 may be performed by a first network node, e.g., BS 120 or functionally equivalent entity such as a CU.

The classifier may perform filtering, i.e., the profiles associated with remote interference may go through a filter. In other words, indications associated with remote interference, such as RIM-RSs, may be classified into groups that may be linked to different actions upon detection of indications. For example, if the indications associated with remote interference are legitimate, an individual BS or a network node acting as a RIM facilitator, i.e., proxy, such a cluster head or a CU, may engage in RIM actions, i.e., perform an action comprising remote interference management, defined according to frameworks 1, 2.1 or 2.2 in R1-1809943, or extensions of those.

Another possibility is to take no action at all. This could be the case of detectable indications associated with remote interference that are coming from another nearby set of network nodes, possibly connected to the same core network, such as 5G core network. This may be the easiest classification scenario, since information from the shared core would facilitate the classification tremendously. Nonetheless, such cases can also be used to train the classifier.

The process of FIGURE 10 may start at step 1010. At step 1020, the first network node may prepare for response actions. Moreover, at step 1020, the first network node may determine whether an indication associated with remote interference, such as RIM-RS, is legitimate, i.e., valid. If the first network determines that the indication associated with remote interference is not legitimate, i.e., the indication is malicious, the process may proceed to step 1040, wherein the first network node may disseminate information about an attack, e.g., by transmitting a warning about the attack. That is to say, the first network node may disseminate information about a threat, possibly within a set of network nodes that it belongs to.

That is to say, step 1040 of the process of may comprise preventive measures that may be triggered via intra-set signalling in case an indication associated with remote interference is classified as malicious. There may be various ways for classifying the indication as malicious. For example, classification of the indication as malicious may be based on realizing that the profile(s), i.e. signature(s), of a local rogue BS attempting an attack would differ from those of legitimate remote victims. Therefore, there is no need perform interference mitigation in such a case but ideally warnings(s) may be triggered, i.e. signalling within a set of BSs, to indicate the attack and disseminate information about the attacker(s). The attack may be for example, a Denial-of-Service, DoS, Distributed DoS, DDoS or Bandwidth Stealing Attack, BAS.

However, if the first network node the first network determines that the indication associated with remote interference is legitimate, i.e., valid, the process may proceed to step 1050, wherein the first network node may further determine whether an action is required related to the indication associated with remote interference. If the first network determines that an action is not required, the process may proceed to step 1070, wherein the process ends. Thus, in this case the indication associated with remote interference may be ignored, i.e., discarded.

On the other hand, if the first network node the first network determines that an action is required related to the indication associated with remote interference, the process may proceed to step 1060. At step 1060, the first network node may proceed with remote interference management, e.g., by reducing transmission power or directing transmissions differently. Remote interference management may also comprise signalling. After step 1060, the process may proceed to step 1070, wherein the process ends.

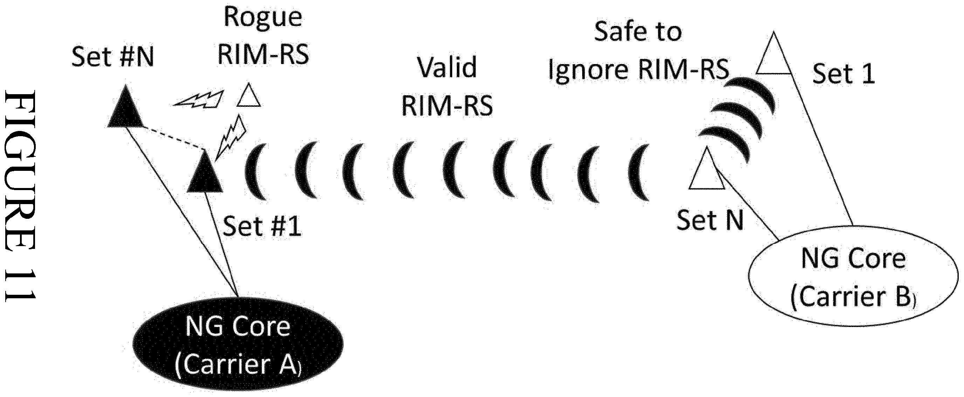

FIGURE 11 illustrates an exemplary concept related to classification in accordance with at least some embodiments. The exemplary concept of FIGURE 11 operation may be related to the classification of indications associated with remote interference, such as RIM-RS. As shown in FIGURE 11, the indications may be classified into three categories, comprising indications that are rogue, indications that are valid and indications that are safe to ignore.

According to the exemplary concept of FIGURE 11, BSs in Set #1 of Carrier B may ignore the indications associated with remote interference identified as coming from *Set #N,* i.e., identified as safe to ignore. Moreover, Set #1 of Carrier A may receive an indication associated with remote interference from a rogue BS and hence transmit a warning to Set #N of Carrier A, possibly over a backhaul link such as Xn interface. Similarly, Set #N of Carrier A may receive an indication associated with remote interference from a rogue BS and hence transmit a warning about an attack to Set #1 of Carrier A as well. Set #N of Carrier A may also disseminate information about the attack. In some embodiments, transmission of the warning and dissemination of the information about the attack may rely on 5G Core. Moreover, said information about the attack may be used to create or augment a local profile kept by Set #N that is free to ignore the alarm (or at least take it as a warning) and run its own classification procedure.

FIGURE 11 also demonstrates a response over air interface to a previously sent indication associated with remote interference (not shown in FIGURE 11). The response is sent to Set #N of Carrier B to from Set #1 of Carrier A. In the exemplary concept of FIGURE 11, Set #N of Carrier B would be a victim that sent the indication associated with remote interference upon detection of an IoT rise while is Set #1 of Carrier A the aggressor sending the response to the indication associated with remote interference.

In some embodiments of the present invention, a blockchain may be used to maintain a trusted, ordered and immutable database of the profiles of indications associated with remote interference. Clients, such as BSs or network nodes in general, may send data packets comprising information about the profiles and/or actions related to indications associated with remote interference to at least one blockchain server to store the context, i.e. inputs and outputs associated with the decision that led to RIM actions. Such information may be referred to as a RIM profile record. The at least one blockchain server may be referred to as a miner as well.

Blockchains may have a distributed nature, which may be used to eliminate centralized points of vulnerabilities. The distributed nature may be particularly relevant for inter-operator scenarios since every blockchain server would hold the same official copy of the RIM profiles record. Moreover, a small subset of malicious operators would not be able to alter the consistency of the RIM profile record among distributed blockchain servers, even if the servers are hosted by the operators themselves.

Besides the profiles and performed actions, additional pieces of contextual information may also be transmitted to the blockchain by, e.g., first network node 120 or second network node 130, and stored therein for reviewing during auditing. For example, timestamped information on IoT levels, experienced by second network node 130, before and after the RIM actions performed by first network node 120 may be transmitted by second network node 130 to the blockchain and stored therein.

Therefore, one could later verify independently whether the actions and the interference footprint are consistent with the decisions. The trait is an undeniable advantage since RI mitigations do not necessarily share the burden equitably and an independent manner to verify that an inter-carrier agreement is being respected. Otherwise there may be little to no incentives to take any cooperative actions and RIM would degenerate into selfish, reactive and unilateral procedures.

For example, if one single macro aggressor of Carrier B causes harmful interference to many pico victims of Carrier A, it would be reasonable to expect that the macro aggressor would self-impose resource usage restrictions. However, in the absence of a digital record, e.g., the RIM profile record shared via the blockchain, and faced by asymmetric interference conditions, e.g., due to different transmit powers, the macro aggressor of Carrier B may have no incentive to cooperate; meaning that multiple pico cells of Carrier A would suffer a penalty in throughput and/or quality of service.

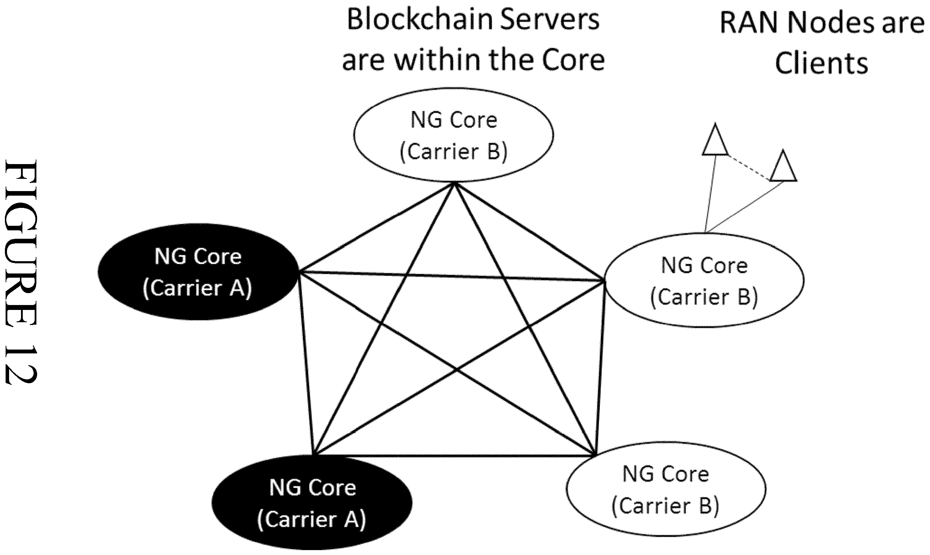

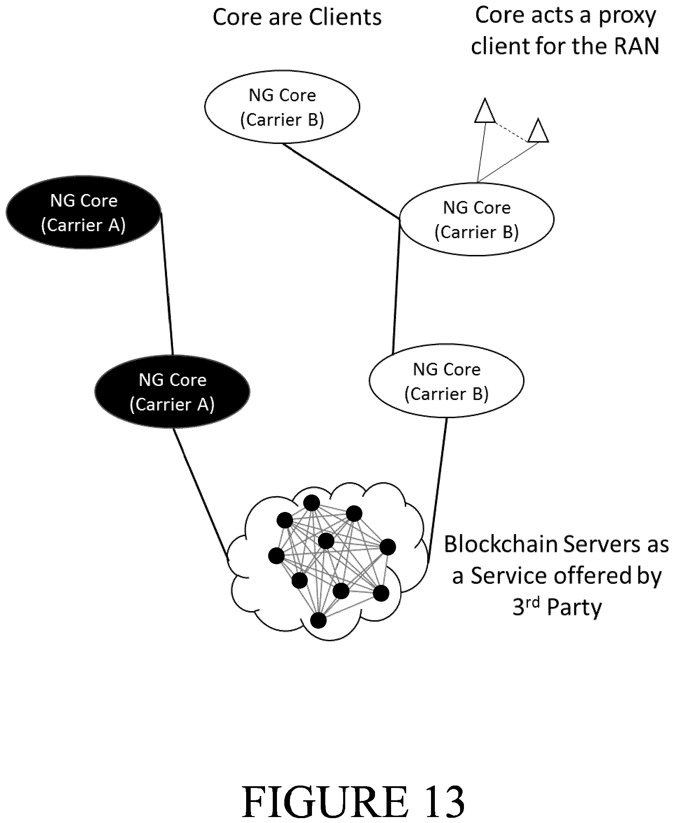

FIGUREs 12 and 13 depict alternative types of blockchains. FIGURE 12 illustrates a carrier-centric blockchain approach in accordance with at least some embodiments. In the carrier-centric blockchain approach of FIGURE 12, blockchain servers may be within the core network and belong to the carriers. In some embodiments, there may be one blockchain server in each NG Core and FIGURE 12 illustrates a scenario comprising three blockchain servers that belong to carrier B and two blockchain servers that belong to carrier A. Radio Access Network, RAN, nodes may be clients. That is to say, wireless network nodes, such as BS 120 and BS 130, may be clients and transmit RIM profile records to the blockchain.

Thus, in the carrier-centric blockchain approach the blockchain servers and the required connectivity among them may be entirely under the responsibility of the carriers. In this case, the clients sending packets to the blockchain are in the respective RANs. The advantage of this approach is the possibility to query servers locally and immediately.

FIGURE 13 illustrates an external blockchain approach in accordance with at least some embodiments. The external blockchain approach of FIGURE 13 may be referred to as a consortium-based approach as well, wherein the blockchain servers may be offered by a 3^{rd} party. In the external blockchain approach that the servers may be provided as a service and the carriers may be considered as clients.

The approaches presented in FIGUREs 12 and 13 may be useful for intra- and inter-operator RIM scenarios, respectively. In both approaches, a peer-to-peer network may collectively adhere to a standardized protocol for inter-node communication and validation of new blocks in the blockchain. Hybrid approaches combining the approaches of FIGUREs 12 and 13 may also be possible.

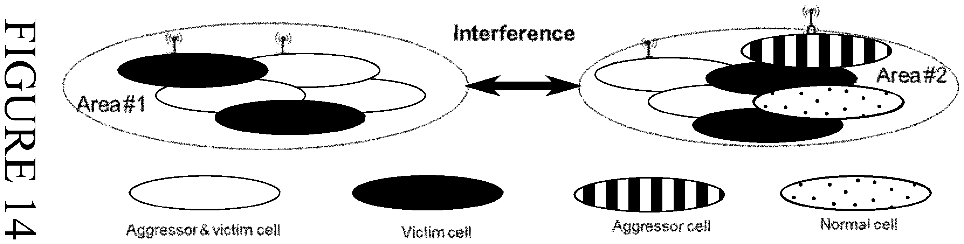

FIGURE 14 illustrates a scenario comprising multiple aggressor and victim cells in accordance with at least some embodiments. As shown in FIGURE 14, aggressor and victim cells may be located in two different areas, with inter-area interference caused by atmospheric ducting. Moreover, FIGURE 14 shows different cells in different areas and more importantly, that the cells in a region may act as victims, aggressors, neutral or victim & aggressor.

In general, it may also be noted that relatively long block times of blockchains, which may depend on a consensus protocol utilized, may not be an issue for RIM scenarios, because typically dynamic adjustments of transmissions take place over a long time scale from a radio perspective, i.e. several minutes and even hours.

Moreover, indications associated with remote interference, e.g., RIM-RSs, may have various forms and embodiments of the present invention are not limited to any specific form. That is to say, embodiments of the present invention are not limited to any physical layer structure of indications associated with remote interference. For example, physical layer structure of indications associated with remote interference may be defined by 3GPP standard specifications.

Also, physical RF attributes associated with said indications may be estimated in various ways as well, such as using at least one of Multiple SIgnal Classification, MUSIC, Estimation of Signal Parameters via Rotational Invariance Techniques, ESPRIT, multilateration, trilateration, direction finding, etc

In some embodiments, time stamped transmissions may be sent, i.e., a transmission of an indication associated with remote interference may comprise a time stamp. Moreover, transmissions of indications associated with remote interference may comprise ranging codes as well, such as Pseudo Random Noise sequences, PRNs, used in GPS systems. In some embodiments, navigational data may not be needed because the exact location of aggressor cells, such as BS 120, may not need to be known. Also, in some embodiments it may be assumed that the first network node, such as a BS or a CU, knows its location and may discover location of other network nodes within the same set using backhaul signalling.

Such assumptions would lead to a simpler implementation, especially in inter-operator scenarios where frame synchronization may not be assumed. This time stamped information may also facilitate general Inter-cell Interference Coordination, ICIC, schemes to distinguish between cross-link interference caused by dynamic Time Division Duplexing, TDD, configurations and remote interference.

Alternatively, multilalateration techniques may be used. That is to say, multilateration techniques may be used instead of absolute time information or when absolute time information is not available. However, multilateration may require additional intra-set signalling, possibly via an Xn interface. In some embodiments, time synchronization may be assumed within a local set of BSs anyway.

For example, a BS, such as BS 120 or BS 130, may transmit a request to other BSs in the same set of BSs that the BS in question belongs to, to obtain required locations of the BSs and time difference of arrival. Multilateration may be particularly advantageous in inter-operator RIM scenarios, wherein a common clock for remote areas may not be required, or available.

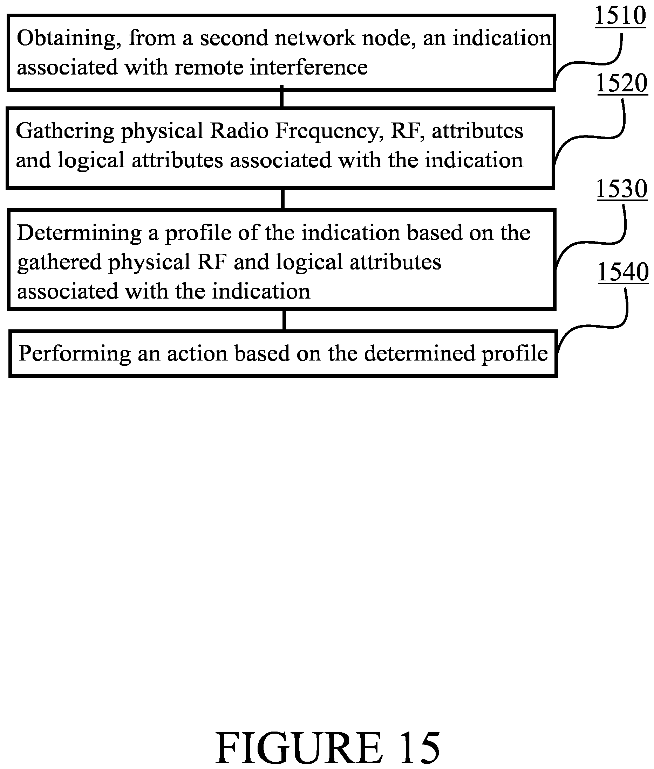

FIGURE 15 is a flow graph of a method in accordance with at least some embodiments of the present invention. The phases of the illustrated method may be performed by BS 120 or a first network node in general, or by a control device configured to control the functioning thereof, possibly when installed therein.

The method may comprise, at step 1510, obtaining, from a second network node, an indication associated with remote interference. In addition, the method may comprise, at step 1520, gathering physical Radio Frequency, RF, attributes and logical attributes associated with the indication. The method may also comprise, at step 1530, determining a profile of the indication based on the gathered physical RF and logical attributes associated with the indication. Finally, the method may comprise, at step 1540, performing an action based on the determined profile.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

In an exemplary embodiment, an apparatus, such as, for example, BS 120 or a first network node in general, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as, for example, BS 120 or a first network node in general, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in wireless communication networks, wherein it is desirable to improve management of remote interference.

### ACRONYMS LIST

- 3GPP: 3^{rd} Generation Partnership Project
- BS: Base Station
- CU: Central Unit
- DL: Downlink
- DU: Distributed Unit
- ESPRIT: Estimation of Signal Parameters via Rotational Invariance Techniques
- GP: Guard Period
- GSM: Global System for Mobile communication
- ICIC: Inter-cell Interference Coordination
- ID: Identity
- IE: Information Element
- IMSI: International Mobile Subscriber Identity
- IoT: Interference over Thermal
- LTE: Long-Term Evolution
- M2M: Machine-to-Machine
- MTC: Machine-type Communications
- MUSIC: Multiple SIgnal Classification
- NFC: Near-Field Communication
- NR: New Radio
- OAM: Operation, Administration and Management
- OFDM: Orthogonal Frequency Division Multiplexing
- OTA: Over-the-Air
- PRACH: Primary Random Access Channel
- PRN: Pseudo Random Noise sequences
- PUCCH: Physical Uplink Control Channel
- PUSCH: Physical Uplink Shared Channel
- RAN: Radio Access Network
- RAT: Radio Access Technology
- RF: Radio Frequency
- RIM: Remote Interference Management
- RS: Reference Signal
- UCI: Uplink Control Channel
- UL: Uplink
- SCS: Subcarrier Spacing
- SIM: Subscriber Identity Module
- TDD: Time Division Duplexing
- UE: User Equipment
- UI: User Interface
- WCDMA: Wideband Code Division Multiple Access
- WiMAX: Worldwide Interoperability for Microwave Access
- WLAN: Wireless Local Area Network

### REFERENCE SIGNS LIST

| | |
|---|---|
| 110, 112 | Wireless terminal, e.g., UE |
| 120, 130 | wireless network node, e.g., BSs |
| 140 | Core network |
| 115, 125, 135, 145 | Interfaces |
| 210 | Slot length |
| 220 | Propagation delay |
| 230 | Downlink transmission |
| 400-470 | Structure of the apparatus of FIGURE 4 |
| 710 - 775 | Steps of the process of FIGURE 7 |
| 810 - 890 | Steps of the process of FIGURE 8 |
| 910 - 970 | Steps of the process of FIGURE 9 |
| 1010 - 1070 | Steps of the process of FIGURE 10 |
| 1510 - 1540 | Phases of the method of FIGURE 15 |

## Claims

1. A method comprising:
- obtaining (1510), by a first wireless network node (120), an indication associated with remote interference from a second wireless network node (130), wherein the indication is a remote interference management reference signal;
- gathering (1520), by the first wireless network node (120), physical Radio Frequency, RF, attributes and logical attributes associated with the indication;
- determining (1530), by the first wireless network node (120), a profile of the second wireless network node (130) based on the gathered physical RF and logical attributes associated with the indication;
- performing (1540), by the first wireless network node (120), an action based on the determined profile; and
- transmitting information about one of the following: the profile or the action or the profile and the action to a blockchain.

2. The method according to claim 1, wherein gathering (1520) physical RF attributes comprises measuring physical RF attributes of the received indication.

3. The method according to claim 1 or claim 2, wherein the first wireless network node (120) belongs to a set of wireless network nodes and gathering (1520) physical RF attributes comprises gathering (1520) physical RF attributes associated with the indication from other wireless network nodes in the set of wireless network nodes.

4. The method according to claim 3, wherein gathering (1520) physical RF attributes associated with the indication from the set of wireless network nodes further comprises:
- transmitting, to the set of wireless network nodes, a request for reporting at least one physical RF attribute; and
- receiving the at least one physical RF attribute in response to the request.

5. The method according to any of the preceding claims, wherein gathering (1520) logical attributes comprises estimating logical attributes associated with the received indication.

6. The method according to claim 5, wherein gathering (1520) logical attributes further comprises:
- transmitting a request to an external source for at least one logical attribute associated with the indication; and
- receiving the at least one logical attribute in response to the request.

7. The method according to any of the preceding claims, further comprising:
- determining, based on the profile, that the indication associated with remote interference is valid; and
- performing the action in response to determining the indication as valid, the action comprising remote interference management.

8. The method according to any of claims 1 to 6, further comprising:
- determining, based on the profile, that the indication associated with remote interference can be ignored; and
- performing the action in response to determining the indication can be ignored, the action comprising discarding the indication.

9. The method according to any of claims 1 to 6, further comprising:
- determining, based on the profile, that the indication associated with remote interference is malicious; and
- performing the action in response to determining the indication as malicious, the action comprising transmitting a warning message to a third wireless network node.

10. The method according to any of the preceding claims, further comprising:
- transmitting a command to at least one wireless terminal for requesting the at least one wireless terminal to report whether the indication associated with remote interference has been detected; and
- obtaining the indication associated with remote interference by receiving a response to the command from the at least one wireless terminal.

11. The method according to any of the preceding claims, wherein the first wireless network node (120) is associated with an aggressor cell and the second wireless network node (130) is associated with a victim cell.

12. An apparatus (400) comprising:
- means for obtaining, from a second wireless network node (130), an indication associated with remote interference, wherein the indication is a remote interference management reference signal;
- means for gathering physical Radio Frequency, RF, attributes and logical attributes associated with the indication;
- means for determining a profile of the second wireless network node (130) based on the gathered physical RF and logical attributes associated with the indication;
- means for performing an action based on the determined profile; and
- means for transmitting information about one of the following: the profile or the action or the profile and the action to a blockchain.

13. The apparatus (400) according to claim 12, further comprising means for performing a method according to any of claims 2 - 11.

14. A computer program comprising executable code which, when run in a first wireless network node (120), causes said first wireless network node (120) to perform the method steps according to any of claims 1 to 11

## Patentansprüche

1. Verfahren, umfassend:
- Erzielen (1510), durch einen ersten drahtlosen Netzwerkknoten (120), einer Angabe, die mit einer Ferninterferenz von einem zweiten drahtlosen Netzwerkknoten (130) verknüpft ist, wobei die Angabe ein Referenzsignal zur Verwaltung von Ferninterferenzen ist;
- Sammeln (1520), durch den ersten drahtlosen Netzwerkknoten (120), von physischen Hochfrequenz-, RF, Attributen und logischen Attributen, die mit der Angabe verknüpft sind;
- Bestimmen (1530), durch den ersten drahtlosen Netzwerkknoten (120), eines Profils des zweiten drahtlosen Netzwerkknotens (130) basierend auf den gesammelten physischen RF- und logischen Attributen, die mit der Angabe verknüpft sind;
- Ausführen (1540), durch den ersten drahtlosen Netzwerkknoten (120), einer Aktion basierend auf dem bestimmten Profil; und
- Senden von Informationen über eines von: dem Profil oder der Aktion, oder dem Profil und der Aktion, an eine Blockchain.

2. Verfahren nach Anspruch 1, wobei das Sammeln (1520) von physischen RF-Attributen das Messen von physischen RF-Attributen der empfangenen Angabe umfasst.

3. Verfahren nach Anspruch 1 oder Anspruch 2, wobei der erste drahtlose Netzwerkknoten (120) zu einer Menge von drahtlosen Netzwerkknoten gehört, und das Sammeln (1520) von physischen RF-Attributen das Sammeln (1520) von physischen RF-Attributen, die mit der Angabe von anderen drahtlosen Netzwerkknoten in der Menge von drahtlosen Netzwerkknoten verknüpft sind, umfasst.

4. Verfahren nach Anspruch 3, wobei das Sammeln (1520) von physischen RF-Attributen, die mit der Angabe von der Menge von drahtlosen Netzwerkknoten verknüpft sind, ferner umfasst:
- Senden, an die Menge von drahtlosen Netzwerkknoten, einer Anfrage, mindestens ein physisches RF-Attribut zu melden; und
- Empfangen des mindestens einen physischen RF-Attributs als Antwort auf die Anfrage.

5. Verfahren nach einem der vorhergehenden Ansprüche, wobei das Sammeln (1520) von logischen Attributen das Schätzen von logischen Attributen, die mit der empfangenen Angabe verknüpft sind, umfasst.

6. Verfahren nach Anspruch 5, wobei das Sammeln (1520) von logischen Attributen ferner umfasst:
- Senden einer Anfrage an eine externe Quelle für mindestens ein logisches Attribut, das mit der Angabe verknüpft ist; und
- Empfangen des mindestens einen logischen Attributs als Antwort auf die Anfrage.

7. Verfahren nach einem der vorhergehenden Ansprüche, ferner umfassend:
- Bestimmen, basierend auf dem Profil, dass die Angabe, die mit der Ferninterferenz verknüpft ist, gültig ist; und
- Ausführen der Aktion als Antwort auf das Bestimmen, dass die Angabe gültig ist, wobei die Aktion die Verwaltung von Ferninterferenzen umfasst.

8. Verfahren nach einem der Ansprüche 1 bis 6, ferner umfassend:
- Bestimmen, basierend auf dem Profil, dass die Angabe, die mit der Ferninterferenz verknüpft ist, ignoriert werden kann; und
- Ausführen der Aktion als Antwort auf das Bestimmen, dass die Angabe ignoriert werden kann, wobei die Aktion das Verwerfen der Angabe umfasst.

9. Verfahren nach einem der Ansprüche 1 bis 6, ferner umfassend:
- Bestimmen, basierend auf dem Profil, dass die Angabe, die mit der Ferninterferenz verknüpft ist, böswillig ist; und
- Ausführen der Aktion als Antwort auf das Bestimmen, dass die Angabe böswillig ist, wobei die Aktion das Senden einer Warnmeldung an einen dritten drahtlosen Netzwerkknoten umfasst.

10. Verfahren nach einem der vorhergehenden Ansprüche, ferner umfassend:
- Senden eines Befehls an mindestens ein drahtloses Endgerät zum Anfragen, dass das mindestens eine drahtlose Endgerät meldet, ob die Angabe, die mit der Ferninterferenz verknüpft ist, detektiert wurde; und
- Erzielen der Angabe, die mit der Ferninterferenz verknüpft ist, durch Empfangen einer Antwort auf den Befehl von dem mindestens einen drahtlosen Endgerät.

11. Verfahren nach einem der vorhergehenden Ansprüche, wobei der erste drahtlose Netzwerkknoten (120) mit einer Aggressorzelle verknüpft ist und der zweite drahtlose Netzwerkknoten (130) mit einer Opferzelle verknüpft ist.

12. Gerät (400) umfassend:
- Mittel zum Erzielen, von einem zweiten drahtlosen Netzwerkknoten (130), einer Angabe, die mit einer Ferninterferenz verknüpft ist, wobei die Angabe ein Referenzsignal zur Verwaltung von Ferninterferenzen ist;
- Mittel zum Sammeln von physischen Hochfrequenz-, RF, Attributen und logischen Attributen, die mit der Angabe verknüpft sind;
- Mittel zum Bestimmen eines Profils des zweiten drahtlosen Netzwerkknotens (130) basierend auf den gesammelten physischen RF- und logischen Attributen, die mit der Angabe verknüpft sind;
- Mittel zum Ausführen einer Aktion basierend auf dem bestimmten Profil; und
- Mittel zum Senden von Informationen über eines von: dem Profil oder der Aktion, oder dem Profil und der Aktion, an eine Blockchain.

13. Gerät (400) nach Anspruch 12, ferner umfassend Mittel zum Ausführen eines Verfahrens nach einem der Ansprüche 2 bis 11.

14. Computerprogramm, umfassend ausführbaren Code, der, wenn er auf einem ersten drahtlosen Netzwerkknoten (120) abläuft, bewirkt, dass der erste drahtlose Netzwerkknoten (120) die Verfahrensschritte nach einem der Ansprüche 1 bis 11 ausführt.

## Revendications

1. Procédé comprenant :
- l'obtention (1510), par un premier noeud de réseau sans fil (120), d'une indication associée à une interférence à distance à partir d'un deuxième noeud de réseau sans fil (130), dans lequel l'indication est un signal de référence de gestion d'interférence à distance ;
- la collecte (1520), par le premier noeud de réseau sans fil (120), d'attributs physiques RF (radiofréquence) et d'attributs logiques associés à l'indication ;
- la détermination (1530), par le premier noeud de réseau sans fil (120), d'un profil du deuxième noeud de réseau sans fil (130) sur la base des attributs physiques RF et logiques collectés associés à l'indication ;
- la réalisation (1540), par le premier noeud de réseau sans fil (120), d'une action sur la base du profil déterminé ; et
- la transmission, à une chaîne de blocs, d'informations sur l'un des éléments suivants : le profil ou l'action ou le profil et l'action.

2. Procédé selon la revendication 1, dans lequel la collecte (1520) d'attributs RF physiques comprend la mesure d'attributs RF physiques de l'indication reçue.

3. Procédé selon la revendication 1 ou la revendication 2, dans lequel le premier noeud de réseau sans fil (120) appartient à un ensemble de noeuds de réseau sans fil, et la collecte (1520) d'attributs RF physiques comprend la collecte (1520) d'attributs RF physiques associés à l'indication d'autres noeuds de réseau sans fil de l'ensemble de noeuds de réseau sans fil.

4. Procédé selon la revendication 3, dans lequel la collecte (1520) d'attributs RF physiques associés à l'indication de l'ensemble de noeuds de réseau sans fil comprend en outre :
- la transmission, à l'ensemble de noeuds de réseau sans fil, d'une demande pour rapporter au moins un attribut RF physique ; et
- la réception de l'au moins un attribut RF physique en réponse à la demande.

5. Procédé selon l'une des revendications précédentes, dans lequel la collecte (1520) d'attributs logiques comprend l'estimation d'attributs logiques associés à l'indication reçue.

6. Procédé selon la revendication 5, dans lequel la collecte (1520) d'attributs logiques comprend en outre :
- la transmission d'une demande à une source externe pour au moins un attribut logique associé à l'indication ; et
- la réception de l'au moins un attribut logique en réponse à la demande.

7. Procédé selon l'une des revendications précédentes, comprenant en outre :
- la détermination, sur la base du profil, que l'indication associée à une interférence à distance est valide ; et
- la réalisation de l'action en réponse à la détermination de l'indication comme étant valide, l'action comprenant la gestion de l'interférence à distance.

8. Procédé selon l'une des revendications 1 à 6, comprenant en outre :
- la détermination, sur la base du profil, que l'indication associée à une interférence à distance peut être ignorée ; et
- la réalisation de l'action en réponse à la détermination de l'indication comme pouvant être ignorée, l'action comprenant le rejet de l'indication.

9. Procédé selon l'une des revendications 1 à 6, comprenant en outre :
- la détermination, sur la base du profil, que l'indication associée à une interférence à distance est malveillante ; et
- la réalisation de l'action en réponse à la détermination de l'indication comme étant malveillante, l'action comprenant la transmission d'un message d'avertissement à un troisième noeud de réseau sans fil.

10. Procédé selon l'une des revendications précédentes, comprenant en outre :
- la transmission d'une instruction à au moins un terminal sans fil pour demander à l'au moins un terminal sans fil de signaler si l'indication associée à une interférence à distance a été détectée ; et
- l'obtention de l'indication associée à une interférence à distance en recevant une réponse à l'instruction de l'au moins un terminal sans fil.

11. Procédé selon l'une des revendications précédentes, dans lequel le premier noeud de réseau sans fil (120) est associé à une cellule agresseur et le deuxième noeud de réseau sans fil (130) est associés à une cellule victime.

12. Appareil (400) comprenant :
- des moyens pour obtenir, à partir d'un deuxième noeud de réseau sans fil (130), une indication associée à une interférence à distance, dans lequel l'indication est un signal de référence de gestion d'interférence à distance ;
- des moyens pour collecter des attributs physiques RF (radiofréquence) et des attributs logiques associés à l'indication ;
- des moyens pour déterminer un profil du deuxième noeud de réseau sans fil (130) sur la base des attributs physiques RF et logiques collectés associés à l'indication ;
- des moyens pour réaliser une action sur la base du profil déterminé ; et
- des moyens pour transmettre à une chaîne de blocs des informations sur l'un des éléments suivants : le profil ou l'action ou le profil et l'action.

13. Appareil (400) selon la revendication 12, comprenant en outre des moyens pour réaliser un procédé selon l'une des revendications 2 à 11.

14. Programme informatique comprenant un code exécutable qui, lorsqu'il est exécuté dans un premier noeud de réseau sans fil (120), amène ledit premier noeud de réseau sans fil (120) à réaliser les étapes de procédé selon l'une des revendications 1 à 11.
